# EUROPEAN PATENT APPLICATION

(11) **EP 3 428 680 A1**
(43) Date of publication of application: **16.01.2019**
(21) Application number: 18179327.4
(22) Date of filing: 22.06.2018
(51) Int. Cl.: G01S 13/93, G01S 13/46, G01S 17/46, G01S 17/93, G01S 13/42

(54) **AUTOMATED BRAKING SYSTEM**

(30) Priority: 12.07.2017 US 201715647645
(71) Applicant: Aptiv Technologies Limited, St. Michael (BB)
(72) Inventor: KRISHNA PRASAD, Premchand, WESTFIELD, INDIANA 46074 (US)
(74) Representative: Robert, Vincent

(57) **Abstract**

An automated braking system (10) for use on an automated vehicle includes a braking-actuator (24), a ranging-sensor (18), a digital-map (48), and a controller (44). The braking-actuator (24) controls movement (20) of a host-vehicle (12). The ranging-sensor (18) detects a distance (26), a direction (28), and an elevation (14) of targets in a field-of-view (30) of the ranging-sensor (18). The field-of-view (30) includes a roadway (32). The digital-map (48) defines a travel-route (50) of the host-vehicle (12) and specifies a gradient (52) of the roadway (32). The controller (44) is in communication with the braking-actuator (24), the ranging-sensor (18), and the digital-map (48). The controller (44) determines that a first-collection (58) of the targets above a horizon (54) is an overpass (56) when the gradient (52) indicates that the roadway (32) descends below the overpass (56). The controller (44) disregards the first-collection (58) of targets associated with the overpass (56) when the gradient (52) is indicated, and activates the braking-actuator (24) when the controller (44) determines that a second-collection (62) of targets from below the horizon (54) are an obstruction (64) on the travel-route (50) beneath the overpass (56).

## Description

### TECHNICAL FIELD OF INVENTION

This disclosure generally relates to an automated braking system, and more particularly relates to an automated braking system that detects objects beneath an overpass.

### BACKGROUND OF INVENTION

It is known to detect an overpass spanning a roadway using a radar-sensor. The typical radar-sensor is not able to distinguish between the overpass and objects beneath the overpass, which may result in false detections and/or a failure to detect objects on a roadway beneath the overpass.

### SUMMARY OF THE INVENTION

In accordance with one embodiment, an automated braking system for use on an automated vehicle is provided. The automated braking system includes a braking-actuator, a ranging-sensor, a digital-map, and a controller. The braking-actuator controls movement of a host-vehicle. The ranging-sensor detects a distance, a direction, and an elevation of targets in a field-of-view of the ranging-sensor. The field-of-view includes a roadway traveled by the host-vehicle. The digital-map defines a travel-route of the host-vehicle and specifies a gradient of the roadway. The controller is in communication with the braking-actuator, the ranging-sensor, and the digital-map. The controller determines that a first-collection of the targets above a horizon is an overpass when the gradient indicates that the roadway descends below the overpass. The controller disregards the first-collection of the targets associated with the overpass when the gradient is indicated, and activates the braking-actuator when the controller determines that a second-collection of targets from below the horizon are an obstruction on the travel-route beneath the overpass.

The ranging-sensor may include a 3-D radar. The ranging-sensor may include a lidar. The overpass may be initially detected in a same-horizontal-plane as the host-vehicle. The overpass may be detected in another-horizontal-plane relative to the host-vehicle. The obstruction may be a stationary-object. The obstruction may be a slow-moving-object.

In another embodiment, a method of operating an automated braking system for use on an automated vehicle is provided. The method includes the steps of controlling movement of a host-vehicle, detecting targets, defining a travel-route, determining an overpass, and activating a braking-actuator. The step of controlling movement of a host-vehicle includes controlling, with a braking-actuator, movement of the host-vehicle. The step of detecting targets includes, detecting, with a ranging-sensor, a distance, a direction, and an elevation of the targets in a field-of-view of the ranging-sensor, wherein the field-of-view includes a roadway traveled by the host-vehicle. The step of defining the travel-route includes defining, with a digital-map, the travel-route of the host-vehicle wherein the digital-map specifies a gradient of the roadway. The step of determining the overpass includes determining, with a controller in communication with the braking-actuator, the ranging-sensor, and the digital-map, that a first-collection of the targets above a horizon is the overpass when the gradient indicates that the roadway descends below the overpass, and disregarding the first-collection of targets associated with the overpass when the gradient is indicated. The step of activating the braking-actuator includes activating the braking-actuator when the controller determines that a second-collection of targets from below the horizon are an obstruction on the travel-route beneath the overpass.

The method may further include the step of detecting the overpass in a same-horizontal-plane as the host-vehicle. The method may further include the step of detecting the overpass in another-horizontal-plane relative to the host-vehicle. The method may further include the step of activating the braking-actuator when the obstruction is a stationary-object. The method may further include the step of activating the braking-actuator when the obstruction is a slow-moving-object.

In yet another embodiment, an automated vehicular braking system is provided. The automated vehicular braking system includes a ranging-sensor, a digital-map that indicates a roadway, and a controller in communication with the braking-actuator, the ranging-sensor, and the digital-map. The controller determines the digital-map indicates that the roadway passes below an overpass, disregards the overpass when a host-vehicle approaches the overpass, and operates the host-vehicle to avoid an obstruction detected on the roadway beneath the overpass.

The overpass may be initially detected in a same-horizontal-plane as the host-vehicle. The overpass may be detected in another-horizontal-plane relative to the host-vehicle. The obstruction may be a stationary-object. The obstruction may be a slow-moving-object.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is an illustration of an automated braking system in accordance with one embodiment;
Fig. 2 is a top-view of a host-vehicle equipped with the automated braking system of Fig. 1 in accordance with one embodiment;
Fig. 3 is side-view of the host-vehicle of Fig. 2 in accordance with one embodiment;
Fig. 4 is a flow chart of a method of operating the automated braking system of Fig. 1 in accordance with another embodiment;
Fig. 5 is an illustration of an automated vehicular braking system in accordance with yet another embodiment;
Fig. 6 is a top-view of a host-vehicle equipped with the automated vehicular braking system of Fig. 5 in accordance with yet another embodiment; and
Fig. 7 is side-view of the host-vehicle of Fig. 6 in accordance with yet another embodiment.

### DETAILED DESCRIPTION

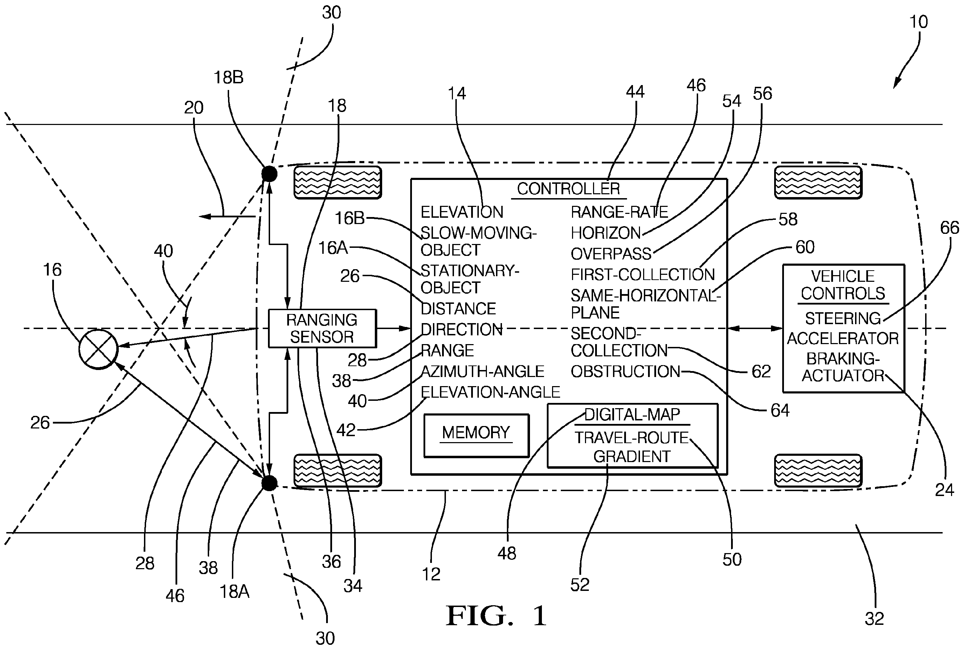

Fig. 1 illustrates a non-limiting example of an automated braking system 10, hereafter referred to as the system 10, for use on an automated vehicle 12, hereafter referred to as a host-vehicle 12. As will be described in more detail below, the system 10 is an improvement over prior braking systems because the system 10 is configured to more accurately determine an elevation 14 of an object 16 using a ranging-sensor 18 and control movement 20 of the host-vehicle 12 based on the elevation 14. As used herein, the term 'automated vehicle' is not meant to suggest that fully automated or autonomous operation of the host-vehicle 12 is required. It is contemplated that the teachings presented herein are applicable to instances where the host-vehicle 12 is entirely manually operated by a human and the automation is merely providing assistance to the human, and possibly operating the brakes of the host-vehicle 12 to prevent the host-vehicle 12 from colliding with an other-vehicle 22.

The system 10 includes a braking-actuator 24 that controls movement 20 of the host-vehicle 12. Movement 20 may be defined as forward-movement and/or rearward-movement of the host-vehicle 12. In the non-limiting examples illustrated in Figs. 1 - 3 the movement 20 is forward-movement. The braking-actuator 24 may be installed on each wheel of the host-vehicle 12 and may be a friction-device. The braking-actuator 24 may also be an electric-motor that may utilize regenerative-braking that may exist on hybrid-electric-vehicles or electric-vehicles, as will be understood by one skilled in the art.

The system 10 also includes the ranging-sensor 18 that detects a distance 26, a direction 28, and the elevation 14 of targets in a field-of-view 30 of the ranging-sensor 18, wherein the field-of-view 30 includes a roadway 32 traveled by the host-vehicle 12. The ranging-sensor 18 may be a radar 34 or a lidar 36. Typically, radar-systems on vehicles are capable of only determining a range 38 (i.e. distance 26) and azimuth-angle 40 (i.e. direction 28) to the target so may be referred to as a two-dimensional (2D) radar-system. Other radar-systems are capable of determining an elevation-angle 42 (i.e. elevation 14) to a target so may be referred to as a three-dimensional (3D) radar-system. In the non-limiting example illustrated in Fig. 1, the ranging-sensor 18 is a 3D radar-system that includes both a left-sensor 18A and a right-sensor 18B. It is contemplated that the teachings presented herein are applicable to both 2D radar-systems and 3-D radar-systems with one or more sensor devices, i.e. multiple instances of the radar 34. The radar 34 is generally configured to detect a radar-signal (not shown) that may include data indicative of a detected-target proximate to the host-vehicle 12. As used herein, the detected-target may be the object 16 that is detected by the radar 34 and tracked by a controller 44, as will be described below.

By way of example and not limitation, the radar 34 may be configured to output a continuous or periodic data stream that includes a variety of signal characteristics associated with each target detected. The signal characteristics may include or be indicative of, but are not limited to, the range 38 to the target from the host-vehicle 12, the azimuth-angle 40 to the target relative to a host-vehicle-longitudinal-axis (not specifically shown), the elevation-angle 42 relative to the left-sensor 18A and/or the right-sensor 18B, an amplitude (not shown) of the radar-signal, and a relative-velocity of closure (i.e. a range-rate 46) relative to the target.

The system 10 also includes a digital-map 48 that defines a travel-route 50 of the host-vehicle 12 and specifies a gradient 52 of the roadway 32. As used herein, the gradient 52 is a slope, grade, or angle of inclination of the roadway 32 relative to a horizon 54 of the host-vehicle 12. The digital-map 48 may be located on-board the host-vehicle 12 and may be integrated into the controller 44. The digital-map 48 may be stored 'in the cloud' and accessed via a transceiver (e.g. Wi-Fi, cellular, satellite - not shown). The digital-map 48 and transceiver may also be part of a location-device (e.g. GPS - not shown).

The system 10 also includes the controller 44 in communication with the braking-actuator 24, the ranging-sensor 18, and the digital-map 48. The controller 44 may include a processor (not shown) such as a microprocessor or other control circuitry such as analog and/or digital control circuitry including an application specific integrated circuit (ASIC) for processing data as should be evident to those in the art. The controller 44 may include a memory (not specifically shown), including non-volatile memory, such as electrically erasable programmable read-only memory (EEPROM) for storing one or more routines, thresholds, and captured data. The one or more routines may be executed by the processor to perform steps for determining if a detected target exists along the travel-route 50 of the host-vehicle 12 based on signals received by the controller 44 from the ranging-sensor 18, as described herein.

The controller 44 may analyze the radar-signal to categorize the data from each detected target with respect to a list of previously detected targets having established tracks. As used herein, a track refers to one or more data sets that have been associated with a particular one of the detected targets. By way of example and not limitation, if the amplitude of the radar-signal is above a predetermined amplitude threshold, then the controller 44 determines if the data corresponds to a previously detected target or if a new-target has been detected. If the data corresponds to a previously detected target, the data is added to or combined with prior data to update the track of the previously detected target. If the data does not correspond to any previously detected target because, for example, it is located too far away from any previously detected target, then it may be characterized as a new-target and assigned a unique track identification number. The identification number may be assigned according to the order that data for a new detected target is received, or may be assigned an identification number according to a grid-location in the field-of-view 30.

The controller 44 may determine a region-of-interest (not shown) within the field-of-view 30. The region-of-interest may represent an area directly ahead the host-vehicle 12 that extends from a left-corner and from a right-corner of the host-vehicle 12. The objects 16 in the region-of-interest and the host-vehicle 12 may collide if the host-vehicle 12 continues to move in the direction 28 of the objects 16. The field-of-view 30 also has a known vertical-angle (not specifically shown) and a known horizontal-angle (not specifically shown) that are design features of the ranging-sensor 18 and determine how close to the host-vehicle 12 the objects 16 may be detected.

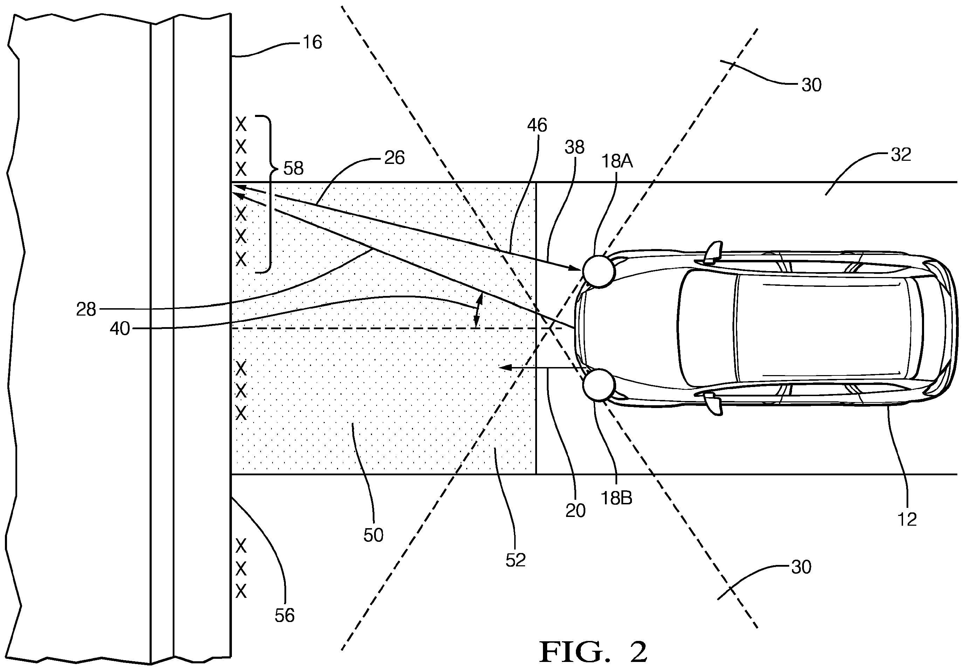

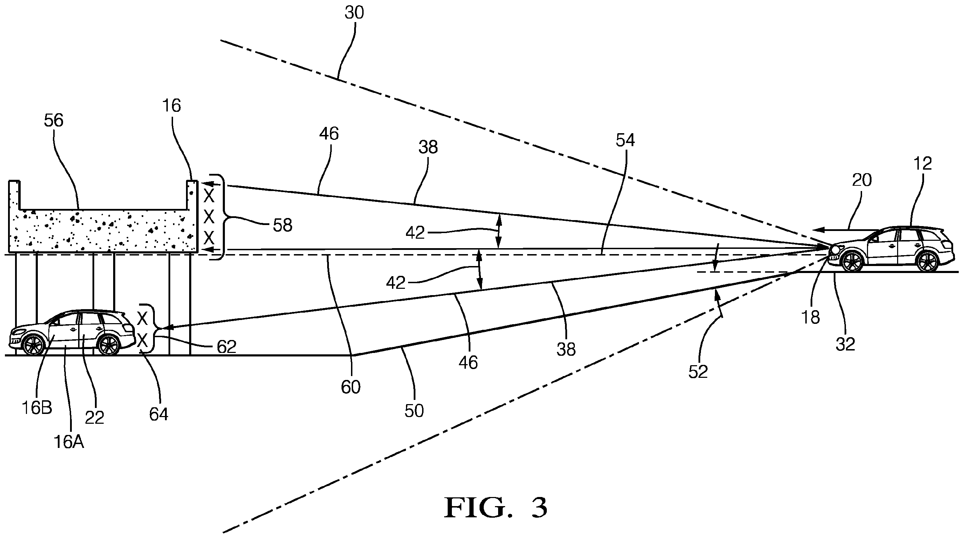

Figs. 2-3 illustrate a traffic scenario where the host-vehicle 12 is approaching an overpass 56. The controller 44 determines that a first-collection 58 of the targets above the horizon 54 is the overpass 56 when the gradient 52 indicates that the roadway 32 descends below (i.e. passes below, passes under) the overpass 56. The controller 44 may initially detect the overpass 56 in a same-horizontal-plane 60 as the host-vehicle 12, or may detect the overpass 56 in another-horizontal-plane relative to the host-vehicle 12. The controller 44 disregards the first-collection 58 of targets associated with the overpass 56 when the gradient 52 is indicated. That is, the controller 44 ignores the detected targets above the horizon 54 when the digital-map 48 indicates that the slope of the roadway 32 is passing below the overpass 56. This is advantageous because the targets that exist on the roadway 32 below the overpass 56 may appear to the radar 34 as emanating from below the ground when the host-vehicle 12 and the overpass 56 are on the same-horizontal-plane 60, as illustrated in Fig. 3. Typically, the controller 44 would ignore radar-signals that appear to emanate from under the ground, which may be multi-bounce reflections from other vehicles. The traffic scenario illustrated in Fig. 3 highlights the benefits of the system 10, as the controller 44 has additional time to react to the detected targets with an early detection provided by the system 10.

The controller 44 activates the braking-actuator 24 when the controller 44 determines that a second-collection 62 of targets from below the horizon 54 are an obstruction 64 on the travel-route 50 beneath the overpass 56, as illustrated in Fig. 3. The obstruction 64 may be a stationary-object 16A or a slow-moving-object 16B based on the range-rate 46 as determined by the controller 44. As an alternative to activating the braking-actuator 24, the controller 44 may operate the host-vehicle 12 in some alternative manner to avoid the object 16, i.e. avoid a collision with the object 16. For example, the controller 44 may operate a steering (Fig. 1) of the vehicle-controls to steer around the object 16, possibly in combination with activating the braking-actuator 24.

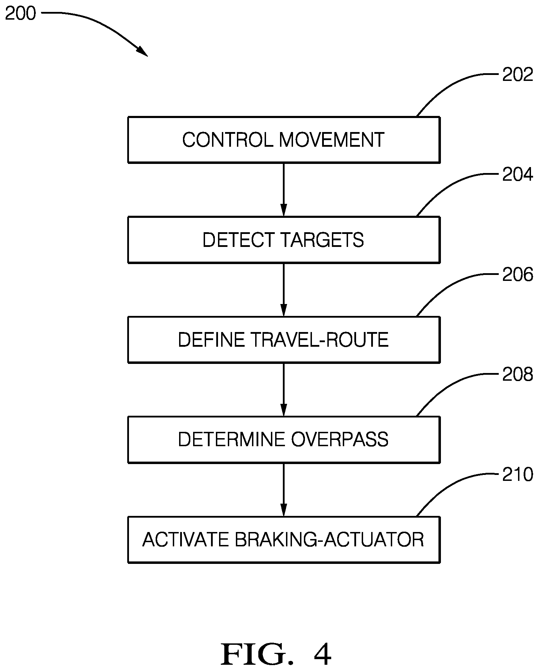

Fig. 4 illustrates a non-limiting example of another embodiment of a method 200 of operating an automated braking system 10, hereafter referred to as the system 10, for use on an automated vehicle 12, hereafter referred to as a host-vehicle 12.

Step 202, CONTROL MOVEMENT, may include the step of controlling, with a braking-actuator 24, movement 20 of a host-vehicle 12. Movement 20 may be defined as forward-movement and/or rearward-movement of the host-vehicle 12. In the non-limiting examples illustrated in Figs. 1-3 the movement 20 is forward-movement. The braking-actuator 24 may be installed on each wheel of the host-vehicle 12 and may be a friction-device. The braking-actuator 24 may also be an electric-motor that may utilize regenerative-braking that may exist on hybrid-electric-vehicles or electric-vehicles, as will be understood by one skilled in the art.

Step 204, DETECT TARGETS, may include the step of detecting, with a ranging-sensor 18, a distance 26, a direction 28, and an elevation 14 of targets in a field-of-view 30 of the ranging-sensor 18, wherein the field-of-view 30 includes a roadway 32 traveled by the host-vehicle 12. The ranging-sensor 18 may be a radar 34 or a lidar 36. Typically, radar-systems on vehicles are capable of only determining a range 38 (i.e. distance 26) and azimuth-angle 40 (i.e. direction 28) to the target so may be referred to as a two-dimensional (2D) radar-system. Other radar-systems are capable of determining an elevation-angle 42 (i.e. elevation 14) to a target so may be referred to as a three-dimensional (3D) radar-system. In the non-limiting example illustrated in Fig. 1, the ranging-sensor 18 is a 3D radar-system that includes both a left-sensor 18A and a right-sensor 18B. It is contemplated that the teachings presented herein are applicable to both 2D radar-systems and 3-D radar-systems with one or more sensor devices, i.e. multiple instances of the radar 34. The radar 34 is generally configured to detect a radar-signal (not shown) that may include data indicative of a detected-target proximate to the host-vehicle 12. As used herein, the detected-target may be the object 16 that is detected by the radar 34 and tracked by a controller 44, as will be described below.

By way of example and not limitation, the radar 34 may be configured to output a continuous or periodic data stream that includes a variety of signal characteristics associated with each target detected. The signal characteristics may include or be indicative of, but are not limited to, the range 38 to the target from the host-vehicle 12, the azimuth-angle 40 to the target relative to a host-vehicle-longitudinal-axis (not specifically shown), the elevation-angle 42 relative to the left-sensor 18A and/or the right-sensor 18B, an amplitude (not shown) of the radar-signal, and a relative-velocity of closure (i.e. a range-rate 46) relative to the target.

The system 10 also includes a digital-map 48 that defines a travel-route 50 of the host-vehicle 12 and specifies a gradient 52 of the roadway 32. As used herein, the gradient 52 is a slope, grade, or angle of inclination of the roadway 32 relative to a horizon 54 of the host-vehicle 12. The digital-map 48 may be located on-board the host-vehicle 12 and may be integrated into the controller 44. The digital-map 48 may be stored 'in the cloud' and accessed via a transceiver (e.g. Wi-Fi, cellular, satellite - not shown). The digital-map 48 and transceiver may also be part of a location-device (e.g. GPS - not shown).

Step 206, DEFINE TRAVEL-ROUTE, may include the step of defining, with a digital-map 48 , a travel-route 50 of the host-vehicle 12 and specifying a gradient 52 of the roadway 32. As used herein, the gradient 52 is a slope, grade, or angle of inclination of the roadway 32 relative to a horizon 54 of the host-vehicle 12. The digital-map 48 may be located on-board the host-vehicle 12 and may be integrated into the controller 44. The digital-map 48 may be stored 'in the cloud' and accessed via a transceiver (e.g. Wi-Fi, cellular, satellite - not shown). The digital-map 48 and transceiver may also be part of a location-device (e.g. GPS - not shown).

Step 208, DETERMINE OVERPASS, may include the step of determining, with a controller 44 in communication with the braking-actuator 24, the ranging-sensor 18, and the digital-map 48, that a first-collection 58 of the targets above a horizon 54 is an overpass 56 when the gradient 52 indicates that the roadway 32 descends below the overpass 56. The controller 44 may include a processor (not shown) such as a microprocessor or other control circuitry such as analog and/or digital control circuitry including an application specific integrated circuit (ASIC) for processing data as should be evident to those in the art. The controller 44 may include a memory (not specifically shown), including non-volatile memory, such as electrically erasable programmable read-only memory (EEPROM) for storing one or more routines, thresholds, and captured data. The one or more routines may be executed by the processor to perform steps for determining if a detected target exists along the travel-route 50 of the host-vehicle 12 based on signals received by the controller 44 from the ranging-sensor 18, as described herein.

The controller 44 may analyze the radar-signal to categorize the data from each detected target with respect to a list of previously detected targets having established tracks. As used herein, a track refers to one or more data sets that have been associated with a particular one of the detected targets. By way of example and not limitation, if the amplitude of the radar-signal is above a predetermined amplitude threshold, then the controller 44 determines if the data corresponds to a previously detected target or if a new-target has been detected. If the data corresponds to a previously detected target, the data is added to or combined with prior data to update the track of the previously detected target. If the data does not correspond to any previously detected target because, for example, it is located too far away from any previously detected target, then it may be characterized as a new-target and assigned a unique track identification number. The identification number may be assigned according to the order that data for a new detected target is received, or may be assigned an identification number according to a grid-location in the field-of-view 30.

The controller 44 may determine a region-of-interest (not shown) within the field-of-view 30. The region-of-interest may represent an area directly ahead the host-vehicle 12 that extends from a left-corner and from a right-corner of the host-vehicle 12. The objects 16 in the region-of-interest and the host-vehicle 12 may collide if the host-vehicle 12 continues to move in the direction 28 of the objects 16. The field-of-view 30 also has a known vertical-angle (not specifically shown) and a known horizontal-angle (not specifically shown) that are design features of the ranging-sensor 18 and determine how close to the host-vehicle 12 the objects 16 may be detected.

Figs. 2-3 illustrate a traffic scenario where the host-vehicle 12 is approaching an overpass 56. The controller 44 determines that a first-collection 58 of the targets above the horizon 54 is the overpass 56 when the gradient 52 indicates that the roadway 32 descends below (i.e. passes below, passes under) the overpass 56. The controller 44 may initially detect the overpass 56 in a same-horizontal-plane 60 as the host-vehicle 12, or may detect the overpass 56 in another-horizontal-plane relative to the host-vehicle 12. The controller 44 disregards the first-collection 58 of targets associated with the overpass 56 when the gradient 52 is indicated. That is, the controller 44 ignores the detected targets above the horizon 54 when the digital-map 48 indicates that the slope of the roadway 32 is passing below the overpass 56. This is advantageous because the targets that exist on the roadway 32 below the overpass 56 may appear to the radar 34 as emanating from below the ground when the host-vehicle 12 and the overpass 56 are on the same-horizontal-plane 60, as illustrated in Fig. 3. Typically, the controller 44 would ignore radar-signals that appear to emanate from under the ground, which may be multi-bounce reflections from other vehicles. The traffic scenario illustrated in Fig. 3 highlights the benefits of the system 10, as the controller 44 has additional time to react to the detected targets with an early detection provided by the system 10.

Step 210, ACTIVATE BRAKING-ACTUATOR, may include the step of activating, with the controller 44, the braking-actuator 24 when the controller 44 determines that a second-collection 62 of targets from below the horizon 54 are an obstruction 64 on the travel-route 50 beneath the overpass 56, as illustrated in Fig. 3. The obstruction 64 may be a stationary-object 16A or a slow-moving-object 16B based on the range-rate 46 as determined by the controller 44. As an alternative to activating the braking-actuator 24, the controller 44 may operate the host-vehicle 12 in some alternative manner to avoid the object 16, i.e. avoid a collision with the object 16. For example, the controller 44 may operate a steering (Fig. 1) of the vehicle-controls to steer around the object 16, possibly in combination with activating the braking-actuator 24.

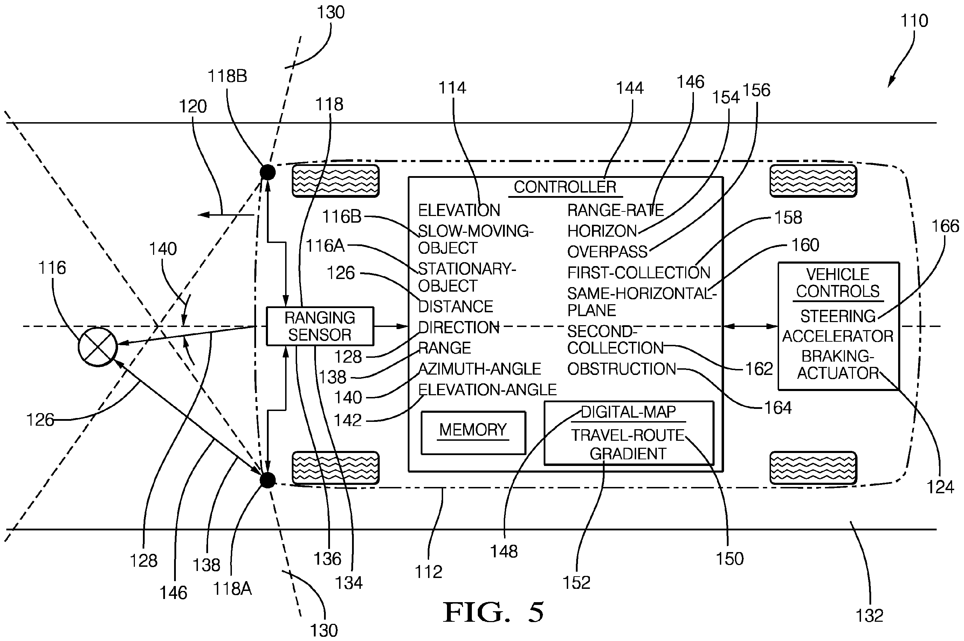

Fig. 5 illustrates a non-limiting example of yet another embodiment of an automated vehicular braking system 110, hereafter referred to as the system 110, for use on an automated vehicle 112, hereafter referred to as a host-vehicle 112. As will be described in more detail below, the system 110 is an improvement over prior braking systems because the system 110 is configured to more accurately determine an elevation 114 of an object 116 using a ranging-sensor 118 and control movement 120 of the host-vehicle 112 based on the elevation 114. As used herein, the term 'automated vehicle' is not meant to suggest that fully automated or autonomous operation of the host-vehicle 112 is required. It is contemplated that the teachings presented herein are applicable to instances where the host-vehicle 112 is entirely manually operated by a human and the automation is merely providing assistance to the human, and possibly operating the brakes of the host-vehicle 112 to prevent the host-vehicle 112 from colliding with an other-vehicle 122.

The system 110 may include a braking-actuator 124 that controls movement 120 of the host-vehicle 112. Movement 120 may be defined as forward-movement and/or rearward-movement of the host-vehicle 112. In the non-limiting examples illustrated in Figs. 5-7 the movement 120 is forward-movement. The braking-actuator 124 may be installed on each wheel of the host-vehicle 112 and may be a friction-device. The braking-actuator 124 may also be an electric-motor that may utilize regenerative-braking that may exist on hybrid-electric-vehicles or electric-vehicles, as will be understood by one skilled in the art.

The system 110 includes the ranging-sensor 118 that detects a distance 126, a direction 128, and the elevation 114 of targets in a field-of-view 130 of the ranging-sensor 118, wherein the field-of-view 130 includes a roadway 132 traveled by the host-vehicle 112. The ranging-sensor 118 may be a radar 134 or a lidar 136. Typically, radar-systems on vehicles are capable of only determining a range 138 (i.e. distance 126) and azimuth-angle 140 (i.e. direction 128) to the target so may be referred to as a two-dimensional (2D) radar-system. Other radar-systems are capable of determining an elevation-angle 142 (i.e. elevation 114) to a target so may be referred to as a three-dimensional (3D) radar-system. In the non-limiting example illustrated in Fig. 1, the ranging-sensor 118 is a 3D radar-system that includes both a left-sensor 118A and a right-sensor 118B. It is contemplated that the teachings presented herein are applicable to both 2D radar-systems and 3-D radar-systems with one or more sensor devices, i.e. multiple instances of the radar 134. The radar 134 is generally configured to detect a radar-signal (not shown) that may include data indicative of a detected-target proximate to the host-vehicle 112. As used herein, the detected-target may be the object 116 that is detected by the radar 134 and tracked by a controller 144, as will be described below.

By way of example and not limitation, the radar 134 may be configured to output a continuous or periodic data stream that includes a variety of signal characteristics associated with each target detected. The signal characteristics may include or be indicative of, but are not limited to, the range 138 to the target from the host-vehicle 112, the azimuth-angle 140 to the target relative to a host-vehicle-longitudinal-axis (not specifically shown), the elevation-angle 142 relative to the left-sensor 118A and/or the right-sensor 118B, an amplitude (not shown) of the radar-signal, and a relative-velocity of closure (i.e. a range-rate 146) relative to the target.

The system 110 also includes a digital-map 148 that indicates a roadway 132. The digital-map 148 also defines a travel-route 150 of the host-vehicle 112 and specifies a gradient 152 of the roadway 132. As used herein, the gradient 152 is a slope, grade, or angle of inclination of the roadway 132 relative to a horizon 154 of the host-vehicle 112. The digital-map 148 may be located on-board the host-vehicle 112 and may be integrated into the controller 144. The digital-map 148 may be stored 'in the cloud' and accessed via a transceiver (e.g. Wi-Fi, cellular, satellite - not shown). The digital-map 148 and transceiver may also be part of a location-device (e.g. GPS - not shown).

The system 110 also includes the controller 144 in communication with the braking-actuator 124, the ranging-sensor 118, and the digital-map 148. The controller 144 may include a processor (not shown) such as a microprocessor or other control circuitry such as analog and/or digital control circuitry including an application specific integrated circuit (ASIC) for processing data as should be evident to those in the art. The controller 144 may include a memory (not specifically shown), including non-volatile memory, such as electrically erasable programmable read-only memory (EEPROM) for storing one or more routines, thresholds, and captured data. The one or more routines may be executed by the processor to perform steps for determining if a detected target exists along the travel-route 150 of the host-vehicle 112 based on signals received by the controller 144 from the ranging-sensor 118, as described herein.

The controller 144 may analyze the radar-signal to categorize the data from each detected target with respect to a list of previously detected targets having established tracks. As used herein, a track refers to one or more data sets that have been associated with a particular one of the detected targets. By way of example and not limitation, if the amplitude of the radar-signal is above a predetermined amplitude threshold, then the controller 144 determines if the data corresponds to a previously detected target or if a new-target has been detected. If the data corresponds to a previously detected target, the data is added to or combined with prior data to update the track of the previously detected target. If the data does not correspond to any previously detected target because, for example, it is located too far away from any previously detected target, then it may be characterized as a new-target and assigned a unique track identification number. The identification number may be assigned according to the order that data for a new detected target is received, or may be assigned an identification number according to a grid-location in the field-of-view 130.

The controller 144 may determine a region-of-interest (not shown) within the field-of-view 130. The region-of-interest may represent an area directly ahead the host-vehicle 112 that extends from a left-corner and from a right-corner of the host-vehicle 112. The objects 116 in the region-of-interest and the host-vehicle 112 may collide if the host-vehicle 112 continues to move in the direction 128 of the objects 116. The field-of-view 130 also has a known vertical-angle (not specifically shown) and a known horizontal-angle (not specifically shown) that are design features of the ranging-sensor 118 and determine how close to the host-vehicle 112 the objects 116 may be detected.

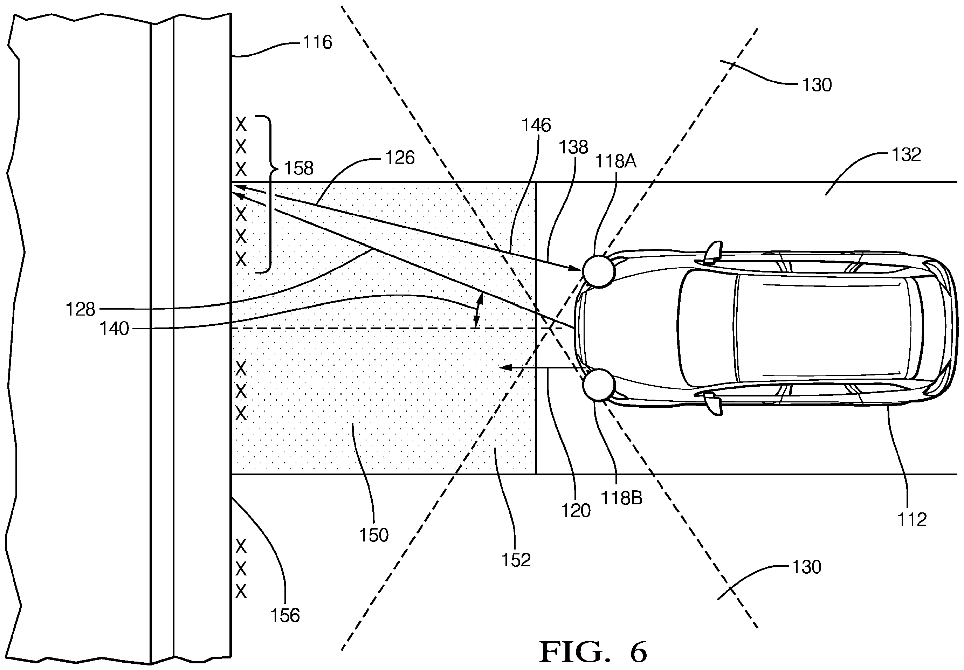

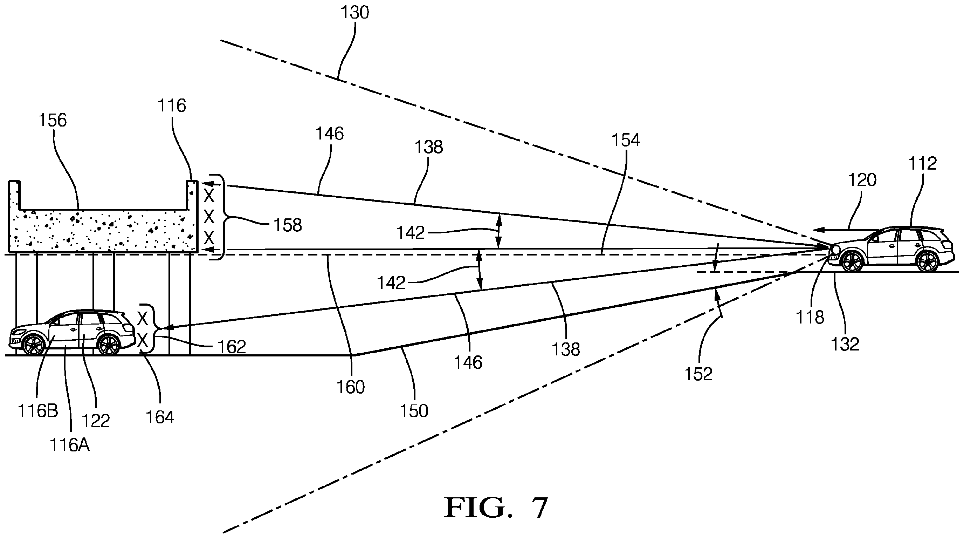

Figs. 6-7 illustrate a traffic scenario where the host-vehicle 112 is approaching an overpass 156. The controller 144 determines the digital-map 148 indicates that the roadway 132 passes below the overpass 156. The controller 144 determines that a first-collection 158 of the targets above the horizon 154 is the overpass 156 when the gradient 152 indicates that the roadway 132 descends below (i.e. passes below, passes under) the overpass 156. The controller 144 may initially detect the overpass 156 in a same-horizontal-plane 160 as the host-vehicle 112, or may detect the overpass 156 in another-horizontal-plane relative to the host-vehicle 112. The controller 144 disregards the overpass 156 when the host-vehicle 112 approaches the overpass 156. More specifically, the controller 144 disregards the first-collection 158 of targets associated with the overpass 156 when the gradient 152 is indicated. That is, the controller 144 ignores the detected targets above the horizon 154 when the digital-map 148 indicates that the slope of the roadway 132 is passing below the overpass 156. This is advantageous because the targets that exist on the roadway 132 below the overpass 156 may appear to the radar 134 as emanating from below the ground when the host-vehicle 112 and the overpass 156 are on the same-horizontal-plane 160, as illustrated in Fig. 7. Typically, the controller 144 would ignore radar-signals that appear to emanate from under the ground, which may be multi-bounce reflections from other vehicles. The traffic scenario illustrated in Fig. 7 highlights the benefits of the system 110, as the controller 144 has additional time to react to the detected targets with the early notice provided by the system 110.

The controller 144 operates the host-vehicle 112 to avoid the object 116, i.e. avoid a collision with the object 116, detected on the roadway beneath the overpass. For example, the controller 144 may operate the steering (Fig. 5) of the vehicle-controls to steer around the object 116, possibly in combination with activating the braking-actuator 124. The controller 144 may activate the braking-actuator 124 when an obstruction 164 is detected on the roadway 132 beneath the overpass 156. More specifically, the controller 144 may activate the braking-actuator 124 when the controller 144 determines that a second-collection 162 of targets from below the horizon 154 are the obstruction 164 on the roadway 132 beneath the overpass 156, as illustrated in Fig. 7. The obstruction 164 may be a stationary-object 116A or a slow-moving-object 116B based on the range-rate 146 as determined by the controller 144.

Accordingly, an automated braking system 10, a controller 44 for the automated braking system 10, and a method 200 of operating the automated braking system 10 is provided. The system 10 is beneficial because the system 10 provides an early detection of obstructions 64 located beneath the overpass 56, that would typically be ignored, allowing additional time for the controller 44 to activate the braking-actuator 24.

While this invention has been described in terms of the preferred embodiments thereof, it is not intended to be so limited, but rather only to the extent set forth in the claims that follow.

## Claims

1. An automated braking system (10) for use on an automated vehicle (12), said system (10) comprising:
a braking-actuator (24) that controls movement (20) of a host-vehicle (12);
a ranging-sensor (18) that detects a distance (26), a direction (28), and an elevation (14) of targets in a field-of-view (30) of the ranging-sensor (18), said field-of-view (30) including a roadway (32) traveled by the host-vehicle (12);
a digital-map (48) that defines a travel-route (50) of the host-vehicle (12) and specifies a gradient (52) of the roadway (32); and
a controller (44) in communication with the braking-actuator (24), the ranging-sensor (18), and the digital-map (148), wherein the controller (44) determines that a first-collection (58) of the targets above a horizon (54) is an overpass (56) when the gradient (52) indicates that the roadway (32) descends below the overpass (56), disregards the first-collection (58) of targets associated with the overpass (56) when the gradient (52) is indicated, and activates the braking-actuator (24) when the controller (44) determines that a second-collection (62) of targets from below the horizon (54) are an obstruction (64) on the travel-route (50) beneath the overpass (56).

2. The system (10) in accordance with claim 1, wherein the ranging-sensor (18) includes a 3-D radar (34), or a lidar (36).

3. The system (10) according to any one of the preceding claims, wherein the overpass (56) is initially detected in a same-horizontal-plane (60) as the host-vehicle (12).

4. The system (10) according to any one of the claims 1 or 2, wherein the overpass (56) is detected in another-horizontal-plane relative to the host-vehicle (12).

5. The system (10) according to any one of the preceding claims, wherein the obstruction (64) is a stationary-object (16A).

6. The system (10) according to any one of the claims 1 to 4, wherein the obstruction (64) is a slow-moving-object (16B).

7. A method (200) of operating an automated braking system (10) for use on an automated vehicle (12), said method (200) comprising the steps of:
controlling (202), with a braking-actuator (24) movement (20) of a host-vehicle (12);
detecting (204), with a ranging-sensor (18), a distance (26), a direction (28), and an elevation (14) of targets in a field-of-view (30) of the ranging-sensor (18), said field-of-view (30) including a roadway (32) traveled by the host-vehicle (12);
defining (206), with a digital-map (48), a travel-route (50) of the host-vehicle (12) and specifies a gradient (52) of the roadway (32); and
determining (208), with a controller (44) in communication with the braking-actuator (24), the ranging-sensor (18), and the digital-map (48), that a first-collection (58) of the targets above a horizon (54) is an overpass (56) when the gradient (52) indicates that the roadway (32) descends below the overpass (56), disregarding the first-collection (58) of targets associated with the overpass (56) when the gradient (52) is indicated, and activating (210) the braking-actuator (24) when the controller (44) determines that a second-collection (62) of targets from below the horizon (54) are an obstruction (64) on the travel-route (50) beneath the overpass (56).

8. The method (200) in accordance with claim 7, further including the step of detecting the overpass (56) in a same-horizontal-plane (60) as the host-vehicle (12).

9. The method (200) in accordance with claim 7, further including the step of detecting the overpass (56) in another-horizontal-plane relative to the host-vehicle (12).

10. The method (200) according to any one of the claims 7 to 9, further including the step of activating the braking-actuator (24) when the obstruction (64) is a stationary-object (16A).

11. The method (200) according to any one of the claims 7 to 9, further including the step of activating (210) the braking-actuator (24) when the obstruction (64) is a slow-moving-object (16B).

12. An automated vehicular braking system (110) comprising:
a ranging-sensor (118);
a digital-map (148) that indicates a roadway (132); and
a controller (144) in communication with the ranging-sensor (118), and the digital-map (148), wherein the controller (144) determines the digital-map (148) indicates that the roadway (132) passes below an overpass (156), disregards the overpass (156) when a host-vehicle (112) approaches the overpass (156), and operates the host-vehicle (112) to avoid an obstruction (164) detected on the roadway (132) beneath the overpass (156).

13. The system (110) in accordance with claim 12, wherein the overpass (156) is initially detected in a same-horizontal-plane (160) as the host-vehicle (112).

14. The system (110) in accordance with claim 12, wherein the overpass (156) is detected in another-horizontal-plane relative to the host-vehicle (112).

15. The system (110) according to any one of the claims 12 to 14, wherein the obstruction (164) is a stationary-object (116A) or a slow-moving-object (116B).
